# EUROPEAN PATENT APPLICATION

(11) **EP 2 738 749 A1**
(43) Date of publication of application: **04.06.2014**
(21) Application number: 12306480.0
(22) Date of filing: 29.11.2012
(51) Int. Cl.: G08C 17/02, H04N 21/41, H04N 21/434, H04N 21/485

(54) **A system for providing a multimedia content to a multimedia rendering device and related devices**

(71) Applicant: Alcatel Lucent, 75007 Paris (FR)
(72) Inventor: Weigmann, Walter, 90765 Fürth (DE); Templ, Wolfgang, 74372 Sersheim (DE)
(74) Representative: ALU Antw Patent Attorneys

(57) **Abstract**

The present invention relates to a method, system and related devices for providing a multimedia content to a multimedia rendering device for rendering the multimedia content. Such multimedia content being provided to the multimedia rendering device by a content provider where the content provider and the multimedia rendering device are coupled. The method includes steps of retrieving an audio signal associated with the multimedia content from the multimedia content of the plurality of multimedia contents provided by the content provider at request of a user device and an audio providing means providing the mobile user device with the audio signal associated with the multimedia content retrieved at request of the user device over an established connection.

## Description

The present invention relates to a method for providing a multimedia content to a multimedia rendering device for rendering the multimedia content as described in the preamble of claim 1, a related system as described in the preamble of claim 3 and a related multimedia rendering device as described in the preamble of claim 8.

Currently such systems and related devices are well known in the art.

Such system is adapted to provide a multimedia content to a multimedia rendering device for rendering this multimedia content at this rendering device where the multimedia content is being provided to the multimedia rendering device by a content provider. Such content provider and the multimedia rendering device typically are coupled over a cable network, a DSL access network or other suitable network. In case such multimedia rendering device like a television or screen is located in public spaces like waiting areas at an airport, train station, restaurant or a bar where mainly common known multimedia contents e.g. TV formats like CNN or N-TV are broadcasted to the audience, not the entire audience is interested in the ongoing broadcast. Even a part of the audience may be disturbed by the ongoing broadcast. In order to minimize the disturbance of the uninterested attendees, the audio function of those TV sets is disabled or turned down to zero.

This does on the one hand protect the uninterested attendees, on the other hand it excludes the interested attendees from a major portion of the information, i.e. the "spoken word".

An objective of the present invention is to provide a system and related devices for providing a multimedia content to a multimedia rendering device for rendering the multimedia content of the above known type but wherein the people interested are still enabled to follow the "spoken word" and or sound associated with the ongoing rendering of the multimedia content e.g. broadcast at the television set.

According to the invention, this object is achieved by the method described in claim 1, the system defined in claim 3, the audio retrieving device as defined in claim 6, the audio providing device as defined in claim 7 and the multimedia rendering device as defined in claim 8.

Indeed, by first, in addition to the multimedia rendering device, receiving the multimedia content from the content provider, by an audio retrieving means and subsequently the audio retrieving means retrieving an audio component associated with the multimedia content that is provided by the content provider, optionally at individually initiated request of a mobile user device being in the environment of a multimedia receiver, and thereafter the audio providing means providing the user device with an audio component associated with the multimedia content, retrieved at individually request of the user device over an established connection between the audio providing means and the requesting mobile user device, the user of such mobile user device is still enabled to attend the spoken word that goes with broadcast that is silenced in order to disturb other people around.

The retrieving of the audio component from the multimedia asset, i.e. the broadcast may be performed by splitting the audio information from the broadcasted signal e.g. by a state of the art MPEG audio decoder or generally the same means the multimedia rendering device MRD usually uses to generate the audio output and transmitting this output to the audio retrieving component.

Alternatively, the retrieving of the audio component may be performed by locating the content provider centrally at the broadcasting station generating a copy of the audio stream (e.g. in MP2 or AC3 format) before the usual digital video broadcast multiplexing which may be executed by means of a baseband processing subsystem of the Digital Video Broadcasting transmitter and send it after suitable re-coding via POTS to the user after below cited requesting procedure.

The providing of a multimedia content in the present invention may include broadcasting of well known television broadcasts of a certain channel like e.g. MTV or CNN, or include a replay of a missed program, a video on demand to a plurality of recipients of the broadcast or may include the streaming of such multimedia contents towards one or more recipients.

Such a multimedia content may include a video component with an associated audio component.

The audio providing means is able to deliver the requested audio component of the multimedia content being currently transmitted and retrieved over an established connection between the audio providing means and the requesting mobile user device where such connection may be short range wireless connection such as Wi-Fi or over a telephone connection set-up between the mobile user device and the audio provisioning means that needs to be coupled to respectively the local Wi-Fi network, Bluetooth or to a phone network via the established wireless communication standards (e.g. GSM, WDCMA, LTE).

Furthermore the multimedia rendering device of the present invention may be a set-top-box connected to a TV, a separate television set or alternatively a combination of receiver and wide area display for broadcast towards a mass public.

An additional feature of the present invention is defined in claim 2 and claim 4.

The system further comprises means for assigning one and the same unique identifier to both the video component signal and the audio component of a multimedia content that is to be provided to a multimedia rendering device. The video component which is displayed on the multimedia rendering device then may include or have the unique identifier being assigned to be presented in overlay to the video component. A user that wishes to listen to the audio component that belongs to the video component currently displayed may use the unique identifier for requesting the audio component belonging to the component currently displayed. The unique identifier may be applied for selecting and/or accessing the audio component.

The assigned identification may be included in request from the mobile user device.

Such assigning means may be incorporated in the content provider where the multimedia content is forwarded to a multimedia rendering device after assigning the unique identifier to both the audio component and the video component of the multimedia content.

An additional feature of the present invention is defined in claim 5.

The audio retrieving means for retrieving an audio signal associated with the multimedia content provided by said content provider is based on splitting the audio component from the received multimedia content.

Such audio retrieving means may be located near or be incorporated in a set-top or television receiver or may be locally by simply connecting it to the audio output of the TV set).

Alternatively a device can make a copy of the (e.g. MP2 or AC3) audio stream centrally at the broadcasting station (in the baseband processing subsystem of the DVB transmitter before usual DVB multiplexing) and send it after suitable re-coding via POTS to the user after below cited requesting procedure.

Further characterizing embodiments of the present a method and system for providing a multimedia content to a multimedia rendering device for rendering the multimedia content are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a multimedia providing system according to the present invention.
Fig. 2 represents a second embodiment of a multimedia providing system according to the present invention.
Fig. 3 represents a third embodiment of a multimedia providing system according to the present invention.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

Moreover, all statements herein reciting principles, aspects, and embodiments of the invention, as well as specific examples thereof, are intended to encompass equivalents thereof.

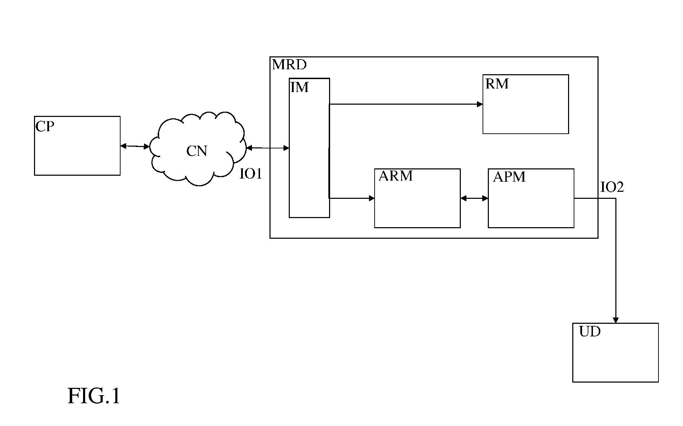

In the following paragraphs, referring to the drawings of Fig.1, a system for providing a multimedia content to a rendering device will be described wherein an implementation of the method for providing a multimedia content to a multimedia rendering device according to the present invention is executed. In the first paragraph the elements of the multimedia rendering system in the figure are described, in the second paragraph, the interconnections between all before described elements/devices are defined and in a subsequent paragraph the actual execution of the method will be described.

A first relevant element of the present invention is the content provider CP which may be an application server, or head-end device that is able to provide multimedia content by well known means of broadcasting (e.g. via emission of modulated RF- carrier, (analogue TV DVBT, DVB_S or DVB-C), streaming or other broadcasting technologies.

A further relevant element of the present invention is the multimedia rendering device MRD being a television set with a receiver for receiving the multimedia contents and subsequent rendering of the received multimedia contents. Alternatively such multimedia rendering device MRD may be implemented by a set-top box that is connected to a separate screen or projector.

Such television set may be an IPTV set-top box coupled to a screen where the set-top box is coupled over the internet to the content provider. Alternatively the television set may be a television coupled via the Cable network to the content provider CP.

It is to be noted that although such system usually comprises a plurality of multimedia rendering devices that are coupled to the content provider CP, in this embodiment only one multimedia rendering device is described for sake of simplicity and clarity.

The content provider CP and the multimedia rendering device MRD are coupled over a cable network or alternatively over an IP protocol based network or other multimedia content distributing means like transmission over satellite (DVBS), terrestrial digital broadcasting via DVBT, and/or others.

Another relevant element of the present invention is a mobile user device UD like a (smart)phone, tablet laptop etc at least having means for communicating over wireless communications interfaces like Wi-Fi, Bluetooth GSM, WCDMA with different wireless transmission standard technologies and means for rendering audio.

Such a multimedia rendering device MRD for rendering the multimedia content received from the content provider CP comprises a rendering means RM for rendering the multimedia content that is received by the multimedia rendering device MRD.

The multimedia content in this embodiment may be the video and audio signal directed to the rendering device like the "classical" TV -internal signal path received at the multimedia rendering device MRD,

Such rendering means RM may include a display and speakers integrated in the multimedia rendering device MRD. Alternatively such rendering means RM may be located externally to the multimedia rendering device MRD.

The multimedia rendering device MRD further may comprise an Interfacing means IM for receiving multimedia contents and subsequent forwarding such received contents to the rendering means RM and audio retrieving means ARM. The Interfacing means IM optionally handles the receipt and forwarding of signaling messages from and towards content provider CP.

The audio retrieving means ARM is able to receive the multimedia content and subsequently retrieve an audio component associated with the multimedia content that is provided by the content provider CP optionally at request of a mobile user device UD being located in the environment of a multimedia rendering MRD.

Further, the multimedia rendering device MRD comprises an audio providing means APM for providing the mobile user device UD with the audio component of the multimedia content retrieved at request of the mobile user device UD via an established connection between the audio providing means APM and the mobile user device UD.

The television set in this embodiment includes the audio providing means APM which in this embodiment is incorporated in the television set MRD. The audio providing means of the multimedia rendering device is coupled to a Wi-Fi network. Further the multimedia rendering device MRD includes an audio retrieving means ARM which receives the multimedia content via the interfacing means IM of the multimedia rendering device MRD.

The Multimedia rendering device MRD has an input/output-terminal IO1 that is at the same time an input terminal of rendering means RM and an input-terminal of the audio retrieving means ARM. The retrieving means ARM further is coupled to the audio providing means APM. The audio providing means APM has an input/output-terminal IO2 that is at the same time an input/output terminal of the Multimedia rendering device MRD.

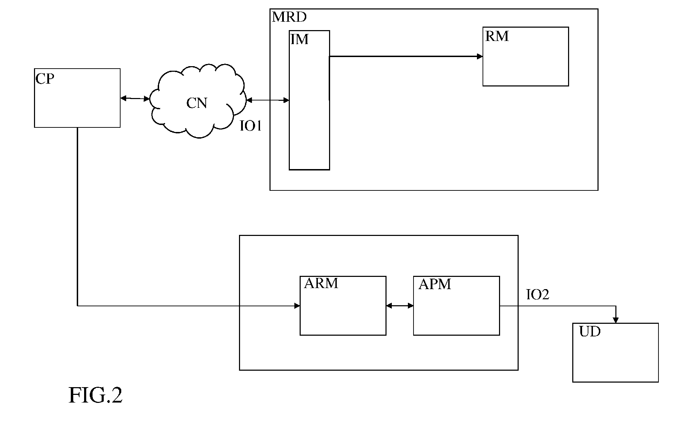

Fig. 2 represents a second embodiment of a multimedia providing system according to the present invention where both the audio retrieving means and the audio providing means are incorporated in a separate network element NE The network element NE may be coupled via any communications network to the content provider on one hand and enabling the establishment of a connection to a user device UD applying wireless transmission protocols , i.e. GSM, WCDMA for connecting the user's mobile phone and the audio providing means of the network element NE.

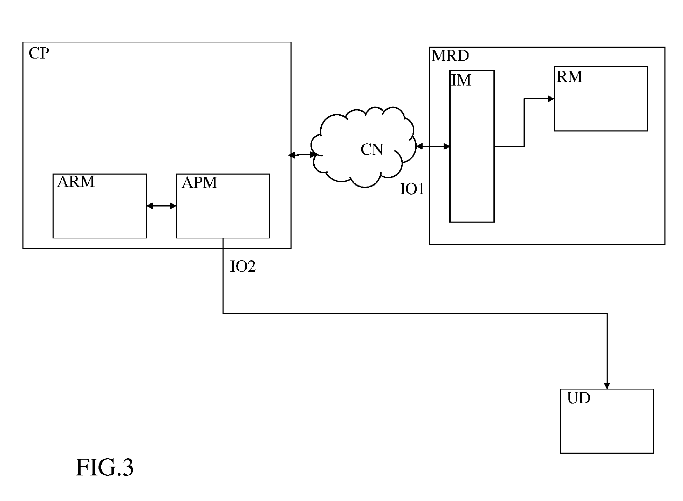

Fig. 3 represents a third embodiment of a multimedia providing system according to the present invention where both the audio retrieving means and the audio providing means are incorporated in the content provider CP. The content provider CP may enable the establishment of a connection to a user device UD applying wireless transmission protocols , i.e. GSM, WCDMA for connecting the user's mobile phone and the audio providing means of the content provider CP.

In order to explain the working of the present invention it is supposed that some public space like a waiting area at an airport, a train station, a restaurant or a bar is equipped with a Television set where mainly common known TV formats like e.g. CNN or N-TV are broadcasted to the audience of this public space.

In this embodiment multimedia content is broadcasted, however alternatively a multimedia content can be streamed or transmitted from storage means e.g. different multimedia players on basis of a personal computer by other transmission technologies.

It is further assumed that in order to minimize the disturbance of the uninterested attendees, the audio function of such TV set is disabled or the volume thereof is set to zero. Although, on one hand this protects the uninterested attendees from superfluous noise but on the other hand it excludes the interested attendees from a major portion of the information, i.e. the "spoken word" that goes with the broadcast, i.e. the spoken words of the news-broadcast currently ongoing.

Furthermore, it is assumed that the attention of a person staying in the public area is being caught by an ongoing broadcast news edition. This person is interested in receiving the audio belonging to the ongoing broadcast. Therefore, this user sets up, using his mobile phone which is Wi-Fi enabled, a Wi-Fi connection to the audio provider APM in the multimedia rendering device MRD.

To this means the user is provided by the operator of the MRD or the content provider CP or other institutions with a unique identification and access authorization code. Activation of the access is enabled by known technologies to set up protected connections, e.g. per Wi-Fi. The code can be provided on on-time usage or for a permanent valid period.

Once such connection is established, the user of the mobile user device UD requests the audio providing means APM to provide the audio stream that belongs to the ongoing broadcast. Subsequently the audio providing means APM forward the request towards the audio retrieving means ARM that receives the request and based upon the request retrieves the audio component from the multimedia content that is provided by the content provider CP. Alternatively as the audio retrieving means always retrieves the audio component associated with the meant multimedia content the audio providing means APM provides the meant audio component on user request or independently from user request.

The retrieval of the audio component from the multimedia content, i.e. the broadcast is performed by splitting the audio information from the video signal by the same means of MRD usually use to generate the audio output and transmitting this output to the audio retrieving component, e.g. analogue filtering or digital MPEG audio decoding. This splitting simply could be applied locally e.g. by the audio providing means to the audio output of the TV set).

Alternatively, in another embodiment the retrieving of the audio component can be performed by having the content provider centrally at the broadcasting station generating a copy of the audio stream e.g. in MP2 or AC3 format) before the usual Digital video broadcast multiplexing which may be executed by means of a baseband processing subsystem of the Digital Video Broadcasting transmitter and send it after suitable re-coding via POTS to the user after below cited requesting procedure.

Subsequently, the audio providing means APM provides the mobile user device UD with the requested audio component of the multimedia content retrieved, i.e. the audio component belonging to the ongoing news broadcast, over the established connection (e.g. Wi-Fi) between the audio providing means APM and the mobile user device UD.

The mobile user device plays the received audio signal at the speaker of the mobile user device or for instance the connected headset.

In an alternative embodiment, as presented in Fig. 2 or Fig. 3 the audio providing means APM respectively is incorporated in network element NE being a network element operated by the television operator at the public location or in the content provider CP. Alternatively, the user sets up a connection via the mobile telephone network with possible wireless transmission protocols such as e.g.. GSM, WCDMA and a connection between the user's mobile phone UD and the audio providing means APM of the multimedia rendering device in the respective network element NE or content provider CP.

A further embodiment of the present invention is that the content provider initially assigns a single unique identifier to both a video signal and an audio component of the multimedia content provided to the at least one multimedia rendering device MRD. A rendering of the multimedia content, i.e. presenting the broadcast the unique identifier assigned to the multimedia content may for instance be presented at the screen as integrated in the broadcast or be presented as overlay.

The unique identifier presented at the screen can be used for selecting the audio component that is associated with the video signal of the multimedia content currently present at the screen. The interested user may use the identification for selecting the appropriate audio component.

Subsequently the user requesting to obtain the audio component corresponding to the current rendered multimedia content or even another multimedia content sends the request for providing the audio component to the audio provider applying the unique identifier that is present at the screen of the multimedia rendering device MRD for identifying and retrieving the corresponding multimedia content.

Further alternative embodiments of the present invention are that instead of the central implementation location, i.e. the audio retrieving means ARM and the audio providing means APM being implemented in the multimedia rendering device MRD, one or both of the audio retrieving means ARM and the audio providing means APM is implemented in a distributed manner in discrete network element NE of the system for providing a multimedia content to said multimedia rendering device MRD as presented in Fig 2 or the audio retrieving means ARM and/or the audio providing means APM being implemented at the content provider as shown in Fig. 3.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for providing a multimedia content to a multimedia rendering device (MRD), for rendering said multimedia content, said multimedia content being provided to said multimedia rendering device (MRD) by a content provider (CP), said content provider (CP) being coupled to said multimedia rendering device (MRD), **CHARACTERISED IN THAT** said method further comprises the steps of:
a. retrieving an audio signal associated with said multimedia content provided by said content provider (CP); and
b. an audio providing means providing a user device (UD) with said audio signal associated with said multimedia content retrieved at request of a user device (UD) over an established connection between said audio providing means and said user device (UD).

2. Method for providing a multimedia content to a multimedia rendering device (MRD), according to claim 1, **CHARACTERISED IN THAT** said method further comprises the step of assigning an identifier to both a video signal and an audio signal of said multimedia content provided to said multimedia receiver (MRD).

3. System for providing a multimedia content to a multimedia rendering device (MRD), said multimedia rendering device (MRD) being adapted to render said multimedia content,, said multimedia content being provided to said multimedia rendering device (MRD) by a content provider (CP), said content provider (CP) being coupled to said multimedia rendering device (MRD), **CHARACTERISED IN THAT** said system further comprises:
a. audio retrieving means (ARM) for receiving said multimedia content and retrieving an audio component associated with said multimedia content provided by said content provider (CP); and
b. audio providing means (APM) for providing a user device (UD) with said audio component associated with said multimedia content retrieved at request of said user device (UD) over an established connection between said audio providing means (APM) and said mobile user device (UD).

4. System according to claim 3 **CHARACTERISED IN THAT** said system further comprises assigning means (AM) for assigning a unique identifier to both a video signal and an audio component of said multimedia content provided to said at least one multimedia rendering device (MRD).

5. System according to claim 3 **CHARACTERISED IN THAT** said audio retrieving means (ARM) for retrieving an audio signal from said multimedia content provided by said content provider (CP) is based on splitting said audio signal from said multimedia content.

6. Audio retrieving device (ARD), for use in a system for providing a multimedia content to a multimedia rendering device (MRD), said multimedia rendering device (MRD) being adapted to render said multimedia content, said multimedia content being provided to said multimedia rendering device (MRD) by a content provider (CP), said content provider (CP) being coupled to said multimedia rendering device (MRD), wherein said Audio retrieving device (ARD), comprises an audio retrieving means (ARM), for retrieving an audio signal associated with said multimedia content provided by said content provider (CP).

7. Audio providing device (APD), for use in a system for providing a multimedia content to a multimedia rendering device (MRD), said multimedia rendering device (MRD) being adapted to render said multimedia content,, said multimedia content being provided to said multimedia rendering device (MRD) by a content provider (CP), said content provider (CP) being coupled to said multimedia rendering device (MRD), wherein said Audio providing device (APD), comprises an audio providing means (APM) for providing a mobile user device (UD) being in the environment of said multimedia rendering device (MRD) with said audio component of said multimedia content over an established connection between said audio providing means (APM) and said mobile user device (UD), said audio providing means (APM) adapted to obtain said requested audio component from a coupled audio retrieving device (ARD) adapted to retrieve said audio signal associated with said multimedia content provided by said content provider (CP).

8. Multimedia rendering device (MRD), for use in a system for providing a multimedia content to said multimedia rendering device (MRD) for rendering said multimedia content, said multimedia content being provided to said multimedia rendering device (MRD) by a content provider (CP), said content provider (CP) being coupled to said multimedia receiver, **CHARACTERISED IN THAT** said system further comprises:
a. audio retrieving means (ARM) for retrieving an audio component associated with said multimedia content provided by said content provider (CP); and
b. audio providing means (APM) for providing said user device (UD) with said audio component of said multimedia content retrieved at said request of said user device (UD) over an established connection between said audio providing means (APM) and said user device (UD).

9. Multimedia rendering device (MRD) according to claim 8, **CHARACTERISED IN THAT** said multimedia rendering device (MRD) further comprises an assigning means (AM) for assigning a unique identifier to both a video signal and an audio component of said multimedia content provided to said at least one multimedia receiver (MRD).
